# FASCICULE DE BREVET EUROPEEN

(11) **EP 4 172 041 B1**
(45) Date de publication et mention de la délivrance du brevet: **03.04.2024**
(21) Numéro de dépôt: 21729525.2
(22) Date de dépôt: 31.05.2021
(51) Int. Cl.: B64C 25/50

(54) **PROCÉDÉ DE RÉGULATION DE LA POSITION ANGULAIRE D'UNE ROUE, EN PARTICULIER, D'UN TRAIN D'ATTERRISSAGE D'UN AÉRONEF**
VERFAHREN ZUR STEUERUNG DER WINKELPOSITION EINES RADES, INSBESONDERE EINES FAHRWERKES EINES FLUGZEUGES
METHOD FOR CONTROLLING THE ANGULAR POSITION OF A WHEEL, IN PARTICULAR A LANDING GEAR OF AN AIRCRAFT

(30) Priorité: 25.06.2020 FR 2006664
(43) Date de publication de la demande: 03.05.2023
(73) Titulaire: Safran Landing Systems, 78140 Vélizy-Villacoublay (FR)
(72) Inventeur: MAZZANE, Ismail, 77550 MOISSY-CRAMAYEL (FR)
(74) Mandataire: Argyma
(86) Numéro de dépôt international: PCT/EP2021/064480
(87) Numéro de publication internationale: WO 2021/259591

(56) Documents cités:
- EP-A1- 2 591 998
- FR-A1- 2 963 606
- GB-A- 813 912
- US-B2- 9 139 295

## Description

### Domaine technique

La présente invention concerne le domaine de l'orientation angulaire d'une roue, en particulier, d'une roue d'un train d'atterrissage avant d'un aéronef.

De manière connue, un train d'atterrissage avant d'un aéronef comporte une roue qui peut être orientée afin de permettre au pilote de déplacer l'aéronef dans la direction désirée lorsque l'aéronef est au sol, en particulier, lors d'une phase de taxi. On connaît diverses solutions pour contrôler l'orientation de la roue par les documents EP2591998A1, US9139295B2, FR2963606A1 et GB813912A.

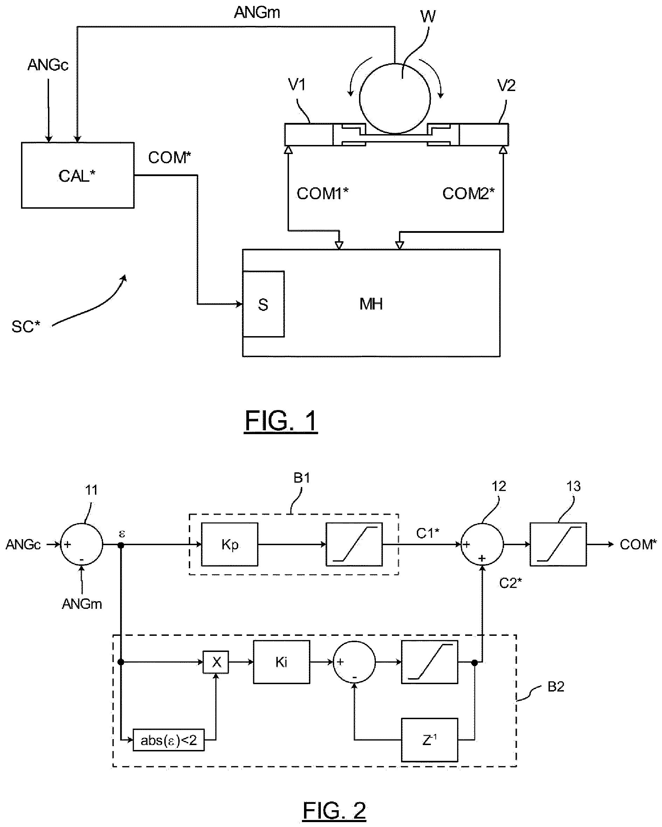

Comme illustré à la [Fig.1], le train d'atterrissage avant comporte une roue W dont la position angulaire ANG est commandée par deux vérins, en particulier, un vérin hydraulique avant V1 et un vérin hydraulique arrière V2. Pour contrôler la position angulaire ANG, il est connu d'utiliser un système de contrôle SC* comportant un module hydraulique MH, comporte généralement une pompe hydraulique (non représentée) et une servovalve S, afin d'émettre respectivement une commande avant COM1* et une commande arrière COM2* au vérin hydraulique avant V1 et au vérin hydraulique arrière V2.

Le système de contrôle SC* comporte un calculateur CAL* configuré pour recevoir une position angulaire de consigne ANGc issue de la cabine de pilotage et une mesure de position angulaire ANGm afin d'en déduire un courant de commande COM* qui est transmis au module hydraulique MH, en particulier à la servovalve S, pour modifier la position angulaire ANG de la roue W afin qu'elle corresponde à la position angulaire de consigne ANGc.

Le calculateur CAL* se présente sous la forme d'un système informatique qui met en oeuvre un procédé de régulation qui est présenté à la [Fig.2]. Le procédé de régulation comporte :
- une étape de détermination 11 d'un écart angulaire ε entre la mesure de la position angulaire ANGm et la position angulaire de consigne ANGc,
- une première étape de correction proportionnelle B1 de manière à déterminer un premier courant C1* à partir de l'écart angulaire ε,
- une deuxième étape de correction intégrale B2 de manière à déterminer un deuxième courant C2* à partir de l'écart angulaire ε,
- une étape d'addition 12 du premier courant C1* et du deuxième courant C2* de manière à déterminer un courant de commande COM* de la servovalve S et
- une étape de limitation 13 du courant de commande COM* afin limiter la valeur de la somme des courants Cl*, C2* et fournir un courant de commande COM* adapté à la servovalve S.

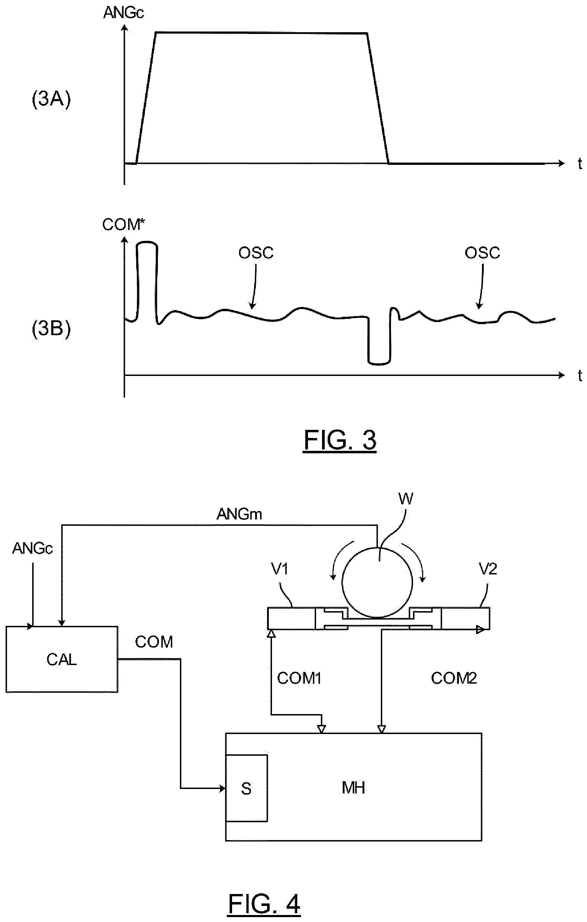

Un tel procédé de régulation est globalement performant. Néanmoins, en référence à la [Fig.3], lors d'une modification de la position angulaire de consigne ANGc (courbe 3A), il a été observé des oscillations OSC du courant de commande COM* (courbe 3B) destiné à la servovalve S ainsi que des variations de pression dans les vérins hydrauliques V1, V2 en régime stationnaire. Autrement dit, en l'absence de modification de la position angulaire de consigne ANGc, le courant de commande COM* continue à être régulé de manière intempestive.

En pratique, lorsque l'écart angulaire ε est proche de 0, la correction intégrale B2 est « chargée » de manière périodique. En effet, une servovalve réelle S n'a pas des caractéristiques parfaites. Lors de la réception d'un courant de commande COM* de valeur faible mais non nul, la servovalve S ne s'active pas. Il en résulte que l'écart angulaire ε n'est pas modifié et que le courant de commande COM* va croître. Lorsque le courant de commande COM* devient suffisamment fort pour commander la servovalve S, celle-ci s'active et l'écart angulaire ε change rapidement de signe puis revient proche de 0. Ce phénomène périodique est à l'origine des oscillations OSC du courant de commande COM* destiné à la servovalve S ainsi que des variations de pression dans les vérins hydrauliques V1, V2 en régime stationnaire.

Une solution immédiate pour éliminer cet inconvénient est de changer la servovalve S afin d'obtenir un modèle plus performant sur le plan de la régulation lorsque l'écart angulaire ε est proche de 0. En pratique, un tel changement entraine des inconvénients nombreux aussi bien sur le plan technique (intégration, certification, etc.) qu'économique (coût).

Une autre solution immédiate serait de désactiver la correction intégrale pour limiter les oscillations OSC mais cela abaisserait les performances de la régulation (erreur statique) et les performances de suivi de l'usure de la servovalve S (dérive à débit nul, etc.).

L'invention vise ainsi à éliminer au moins certains de ces inconvénients en proposant un nouveau procédé de régulation qui élimine au moins certains de ces inconvénients.

L'invention concerne également un aéronef comprenant un train d'atterrissage tel que présenté précédemment.

### PRESENTATION DE L'INVENTION

L'invention concerne un procédé de régulation de la position angulaire d'une roue, en particulier d'une roue d'un train d'atterrissage d'un aéronef, la roue étant reliée à au moins un vérin hydraulique commandé par une servovalve, le procédé comportant :
- une étape de détermination d'un écart angulaire entre une mesure de la position angulaire et une position angulaire de consigne,
- une première étape de correction proportionnelle de manière à déterminer un premier courant à partir de l'écart angulaire
- une deuxième étape de correction intégrale de manière à déterminer un deuxième courant à partir de l'écart angulaire et
- une étape d'addition du premier courant et du deuxième courant de manière à déterminer un courant de commande de la servovalve .

L'invention est remarquable en ce que la deuxième étape de régulation intégrale comporte une sous-étape de limitation du deuxième courant selon une loi paramétrique, la loi paramétrique imposant un deuxième courant de valeur nulle lorsque l'écart angulaire est inférieur, en valeur absolue, à un premier seuil angulaire déterminé.

De manière avantageuse, grâce à l'invention, l'étape de correction intégrale est inhibée uniquement pour des faibles écarts angulaires, c'est-à-dire, inférieurs au premier seuil angulaire déterminé. Cela permet d'éviter une correction par la branche intégrale qui soit intempestive et qui entraine une modification de la pression des vérins. Les défauts réels liés à la servovalve sont ainsi éliminés sans modifier l'architecture physique, évitant ainsi des étapes de certification. En outre, comme la correction intégrale est inhibée de manière ponctuelle, elle continue à être majoritairement active lors de la modification de la position angulaire de la roue. La régulation demeure ainsi optimale et les effets indésirables sont éliminés.

Selon un aspect de l'invention, la loi paramétrique limite le deuxième courant à une valeur de courant maximale autorisée lorsque l'écart angulaire est compris, en valeur absolue, entre un deuxième seuil angulaire déterminé et un troisième seuil angulaire déterminé, le deuxième seuil angulaire déterminé et le troisième seuil angulaire déterminé étant supérieurs au premier seuil angulaire déterminé. La valeur du deuxième courant est ainsi bornée lors d'une modification de la position angulaire de consigne.

Selon un aspect de l'invention, la loi paramétrique limite le deuxième courant selon une rampe ascendante comprise entre la valeur nulle et la valeur de courant maximale autorisée lorsque l'écart angulaire est compris, en valeur absolue, entre le premier seuil angulaire déterminé et le deuxième seuil angulaire déterminé.

Selon un aspect de l'invention, la loi paramétrique limite le deuxième courant selon une rampe descendante comprise entre la valeur de courant maximale autorisée et la valeur nulle lorsque l'écart angulaire est compris, en valeur absolue, entre le troisième seuil angulaire déterminé et un quatrième seuil angulaire déterminé supérieur au troisième seuil déterminé.

Les transitions (ascendante ou descendante) sont ainsi contrôlées pour limiter le deuxième courant.

L'invention concerne également un système de contrôle de la position angulaire d'une roue, en particulier d'une roue d'un train d'atterrissage d'un aéronef, reliée à au moins un vérin hydraulique commandé par une servovalve, le système de contrôle comprenant un calculateur configuré pour :
- déterminer un écart angulaire entre une mesure de la position angulaire et une position angulaire de consigne,
- réaliser une première correction proportionnelle de manière à déterminer un premier courant à partir de l'écart angulaire
- réaliser une deuxième correction intégrale de manière à déterminer un deuxième courant à partir de l'écart angulaire,
- additionner le premier courant et le deuxième courant de manière à déterminer un courant de commande de la servovalve et
- lors de la réalisation de la deuxième correction intégrale, limiter le deuxième courant selon une loi paramétrique, la loi paramétrique imposant un deuxième courant de valeur nulle lorsque l'écart angulaire est inférieur, en valeur absolue, à un premier seuil angulaire déterminé.

L'invention concerne en outre un ensemble d'une roue, en particulier d'une roue d'un train d'atterrissage d'un aéronef, reliée à au moins un vérin hydraulique commandé par une servovalve et d'un système de contrôle tel que présenté précédemment pour déterminer un courant de commande de la servovalve.

De préférence, la roue est reliée à au moins un premier vérin hydraulique et un deuxième vérin hydraulique commandés par la servovalve.

De manière préférée, l'ensemble comprend un module hydraulique, comprenant la servovalve, configuré pour commander directement le premier vérin hydraulique et le deuxième vérin hydraulique.

L'invention concerne aussi un train d'atterrissage d'un aéronef comprenant un ensemble tel que présenté précédemment.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
[Fig.1] La [Fig.1] est une représentation schématique d'un système de contrôle de la position angulaire d'une roue d'un train d'atterrissage avant selon l'art antérieur.
[Fig.2] La [Fig.2] est une représentation schématique des étapes d'un procédé de régulation de la position angulaire selon l'art antérieur.
[Fig.3] La [Fig.3] est une représentation schématique de l'évolution temporelle d'une position angulaire de consigne et du courant de commande de la servovalve selon l'art antérieur.
[Fig.4] La [Fig.4] est une représentation schématique d'un système de contrôle de la position angulaire d'une roue d'un train d'atterrissage avant selon une forme de réalisation de l'invention.
[Fig.5] La [Fig.5] est une représentation schématique des étapes d'un procédé de régulation de la position angulaire selon un exemple de mise en oeuvre.
[Fig.6] La [Fig.6] est une représentation schématique d'une loi paramétrique pour la limitation du deuxième courant issu de la correction intégrale.
[Fig.7] La [Fig.7] est une représentation schématique de l'évolution temporelle d'une position angulaire de consigne, de l'écart angulaire et du courant de commande de la servovalve selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

L'invention concerne un système de contrôle de la position angulaire d'une roue, en particulier, d'une roue d'un train d'atterrissage avant d'un aéronef. De manière connue, un train d'atterrissage avant d'un aéronef comporte une roue qui peut être orientée afin de permettre au pilote de déplacer l'aéronef dans la direction désirée lorsque l'aéronef est au sol, en particulier, lors d'une phase de taxi.

En référence à la [Fig.4], comme présenté précédemment, le train d'atterrissage avant comporte une roue W dont la position angulaire ANG est commandée par deux vérins, en particulier, un vérin hydraulique avant V1 et un vérin hydraulique arrière V2.

Selon l'invention, pour contrôler la position angulaire ANG, on utilise un système de contrôle SC comportant un module hydraulique MH, qui comporte une pompe hydraulique (non représentée) et une servovalve S, afin d'émettre respectivement une commande avant COM1 et une commande arrière COM2 au vérin hydraulique avant V1 et au vérin hydraulique arrière V2.

Le système de contrôle SC comporte un calculateur CAL configuré pour recevoir une position angulaire de consigne ANGc issue de la cabine de pilotage et une mesure de position angulaire ANGm afin d'en déduire un courant de commande COM qui est transmis au module hydraulique MH, en particulier à la servovalve S, pour modifier la position angulaire ANG de la roue W afin qu'elle corresponde à la position angulaire de consigne ANGc.

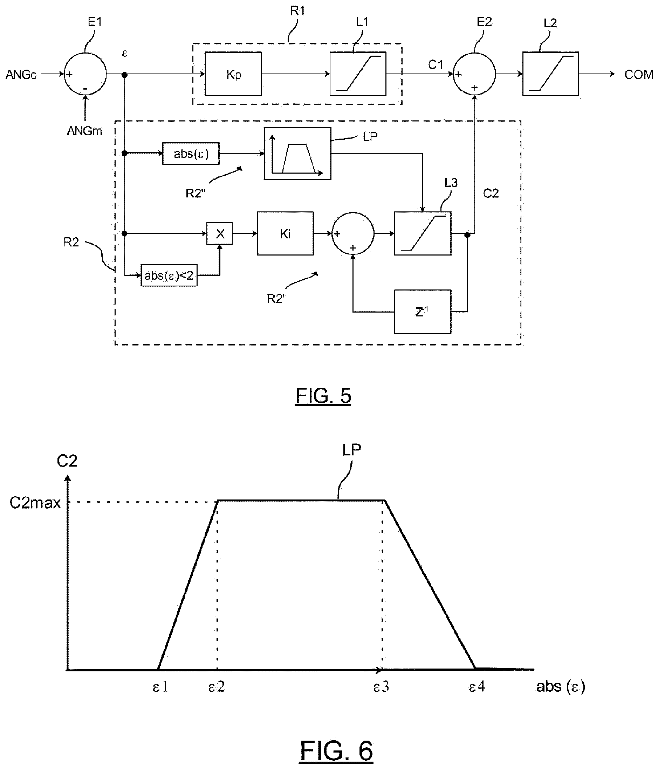

Selon l'invention, le calculateur CAL se présente sous la forme d'un système informatique qui met en oeuvre un procédé de régulation qui est présenté à la [Fig.5].

Tout d'abord, le procédé de régulation comporte une étape de détermination E1 d'un écart angulaire ε entre une mesure de la position angulaire ANGm et la position angulaire de consigne ANGc.

Puis, le procédé de régulation comporte une première étape de correction proportionnelle R1 de manière à déterminer un premier courant C1 à partir de l'écart angulaire ε. En référence à la [Fig.5], lors de l'étape de correction proportionnelle R1, l'écart angulaire ε est multiplié par une première constante Kp de manière à déduire un premier courant C1 qui a été précédemment limité en valeur par un opérateur de limitation L1. De manière préférée, la première étape de correction proportionnelle R1 est analogue à l'art antérieur et ne sera pas présentée plus en détails.

Le procédé de régulation comporte une deuxième étape de correction intégrale R2 de manière à déterminer un deuxième courant C2 à partir de l'écart angulaire ε.

Un courant de commande COM de la servovalve S est ensuite déterminé lors d'une étape d'addition E2 du premier courant C1 et du deuxième courant C2. Le courant de commande COM est limité en valeur par un opérateur de limitation L2 suite à l'addition du premier courant C1 et du deuxième courant C2.

La deuxième étape de correction intégrale R2 va être dorénavant présentée de manière détaillée. Celle-ci comporte une sous-étape d'intégration R2' de l'écart angulaire ε avec une deuxième constante Ki afin d'obtenir le deuxième courant C2. De manière préférée, au cours de la sous-étape d'intégration R2' de l'écart angulaire ε, il est réalisé une activation / désactivation de l'intégration si l'écart ε, en valeur absolue, est compris entre 0 et un seuil prédéterminé, 2° dans cet exemple.

Au cours de la sous-étape d'intégration R2', le deuxième courant C2 est préalablement limité en valeur par un opérateur de limitation L3 afin de former le courant de commande COM. La sous-étape d'intégration est analogue à l'art antérieur et ne sera pas présentée plus en détails.

De manière préférée, selon l'invention, la deuxième étape de régulation intégrale R2 comporte une sous-étape de limitation (R2") du deuxième courant C2 selon une loi paramétrique LP. Contrairement à une limitation classique qui vise à limiter les valeurs extrêmes, la présente loi paramétrique LP est définie pour éviter tout phénomène oscillatoire.

La loi paramétrique LP détermine une valeur du deuxième courant C2 en fonction de la valeur absolue de l'écart angulaire ε. En référence à la [Fig.6], il est défini plusieurs seuils angulaires déterminés de valeur croissante ε1, ε2, ε3, ε4. Les seuils angulaires sont déterminés en fonction des besoins de la régulation (rapidité, précision, erreur statique, etc.).

Lorsque l'écart angulaire ε est inférieur, en valeur absolue, au premier seuil angulaire déterminé ε1, c'est à dire compris entre 0 et ε1, la loi paramétrique LP impose un deuxième courant C2 de valeur nulle. Une telle annulation du deuxième courant C2 permet d'éliminer toutes les oscillations en interdisant à la correction intégrale de se « charger » par intermittence. Aucune commande de courant C2 n'est émise à la servovalve pour commander les vérins V1, V2 dont la pression hydraulique ne varie pas, la partie proportionnelle C1 ne s'annulant que si l'écart est nul. Tout phénomène oscillatoire est éliminé sans remplacement de la servovalve S ou des vérins V1, V2.

Lorsque l'écart angulaire ε est compris, en valeur absolue, entre le deuxième seuil angulaire déterminé ε2 et le troisième seuil angulaire déterminé ε3, le deuxième courant C2 est limité à une valeur de courant maximale autorisée C2max afin de borner la valeur du deuxième courant C2 et protéger la servovalve S.

Lorsque l'écart angulaire ε est compris, en valeur absolue, entre le premier seuil angulaire déterminé ε1 et le deuxième seuil angulaire déterminé ε2, le deuxième courant C2 est limité selon une rampe ascendante comprise entre la valeur nulle et la valeur de courant maximale autorisée C2max. De même, lorsque l'écart angulaire ε est compris, en valeur absolue, entre le troisième seuil angulaire déterminé ε3 et le quatrième seuil angulaire déterminé ε4, le deuxième courant C2 est limité selon une rampe descendante comprise entre la valeur de courant maximale autorisée C2max et la valeur nulle. Les rampes permettent avantageusement d'assurer une variation `lisse' lorsque l'écart ε passe en dessous du deuxième seuil angulaire déterminé ε2 ou au-dessus du troisième seuil angulaire déterminé ε3 pendant le contrôle.

Ainsi, la deuxième correction intégrale R2 demeure active et est uniquement inhibée lorsque l'écart angulaire ε est trop faible pour être perçu par la servovalve S. De manière avantageuse, la valeur du premier seuil angulaire déterminé ε1 peut être adaptée pour obtenir la régulation désirée.

Le calculateur CAL est configuré pour mettre en oeuvre les étapes du procédé de régulation, en particulier, pour :
- déterminer un écart angulaire ε entre une mesure de la position angulaire ANGm et une position angulaire de consigne ANGc,
- réaliser une première correction proportionnelle R1 de manière à déterminer un premier courant C1 à partir de l'écart angulaire ε
- réaliser une deuxième correction intégrale R2 de manière à déterminer un deuxième courant C2 à partir de l'écart angulaire ε,
- additionner le premier courant C1 et le deuxième courant C2 de manière à déterminer un courant de commande COM de la servovalve S,
- lors de la réalisation de la deuxième correction intégrale R2, limiter le deuxième courant C2 selon une loi paramétrique, la loi paramétrique imposant un deuxième courant C2 de valeur nulle lorsque l'écart angulaire ε est inférieur, en valeur absolue, à un premier seuil angulaire déterminé ε1.

De manière avantageuse, il suffit de modifier le procédé de régulation mise en oeuvre par un calculateur CAL pour bénéficier des bénéfices de l'invention, sans aucun autre changement matériel physique.

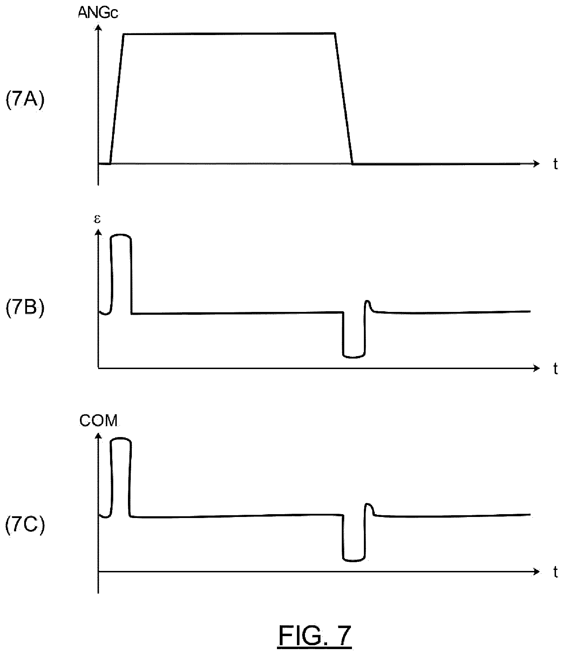

En référence à la [Fig.7], lors de la mise en oeuvre du procédé de régulation, lors d'une modification de la position angulaire de consigne ANGc (courbe 7A), l'écart angulaire ε est annulé lorsqu'il est inférieur premier seuil angulaire déterminé ε1 et ne présente pas d'oscillation (courbe 7B). Il en résulte que le courant de commande COM (courbe 7C) est également dépourvu d'oscillations OSC. Il n'existe ainsi pas de variations de pression indésirables dans les vérins hydrauliques V1, V2 en régime stationnaire. Autrement dit, en l'absence de modification de la position angulaire de consigne ANGc, le courant de commande COM n'est plus corrigé de manière intempestive.

## Revendications

1. Procédé de régulation de la position angulaire (ANG) d'une roue (W), en particulier d'une roue d'un train d'atterrissage d'un aéronef, la roue (W) étant reliée à au moins un vérin hydraulique commandé par une servovalve (S), le procédé comportant :
• une étape de détermination (E1) d'un écart angulaire (ε) entre une mesure de la position angulaire (ANGm) et une position angulaire de consigne (ANGc),
• une première étape de correction proportionnelle (R1) de manière à déterminer un premier courant (C1) à partir de l'écart angulaire (ε)
• une deuxième étape de correction intégrale (R2) de manière à déterminer un deuxième courant (C2) à partir de l'écart angulaire (ε),
• une étape d'addition (E2) du premier courant (C1) et du deuxième courant (C2) de manière à déterminer un courant de commande (COM) de la servovalve (S)
• procédé **caractérisé par le fait que**,
• la deuxième étape de régulation intégrale (R2) comporte une sous-étape de limitation (R2") du deuxième courant (C2) selon une loi paramétrique (LP), la loi paramétrique (LP) imposant un deuxième courant (C2) de valeur nulle lorsque l'écart angulaire (ε) est inférieur, en valeur absolue, à un premier seuil angulaire déterminé (ε1).

2. Procédé de régulation selon la revendication 1, dans lequel la loi paramétrique (LP) limite le deuxième courant (C2) à une valeur de courant maximale autorisée (C2max) lorsque l'écart angulaire (ε) est compris, en valeur absolue, entre un deuxième seuil angulaire déterminé (ε2) et un troisième seuil angulaire déterminé (ε3), le deuxième seuil angulaire déterminé (ε2) et le troisième seuil angulaire déterminé (ε3) étant supérieurs au premier seuil angulaire déterminé (ε1).

3. Procédé de régulation selon la revendication 2, dans lequel la loi paramétrique (LP) limite le deuxième courant (C2) selon une rampe ascendante comprise entre la valeur nulle et la valeur de courant maximale autorisée (C2max) lorsque l'écart angulaire (ε) est compris, en valeur absolue, entre le premier seuil angulaire déterminé (ε1) et le deuxième seuil angulaire déterminé (ε2).

4. Procédé de régulation selon l'une des revendications 2 et 3, dans lequel la loi paramétrique (LP) limite le deuxième courant (C2) selon une rampe descendante comprise entre la valeur de courant maximale autorisée (C2max) et la valeur nulle lorsque l'écart angulaire (ε) est compris, en valeur absolue, entre le troisième seuil angulaire déterminé (ε3) et un quatrième seuil angulaire déterminé (ε4) supérieur au troisième seuil déterminé (ε3).

5. Système de contrôle (SC) de la position angulaire d'une roue (W), en particulier d'une roue d'un train d'atterrissage d'un aéronef, reliée à au moins un vérin hydraulique (V1, V2) commandé par une servovalve (S), le système de contrôle (SC) comprenant un calculateur (CAL) configuré pour :
• déterminer un écart angulaire (ε) entre une mesure de la position angulaire (ANGm) et une position angulaire de consigne (ANGc),
• réaliser une première correction proportionnelle (R1) de manière à déterminer un premier courant (C1) à partir de l'écart angulaire (ε)
• réaliser une deuxième correction intégrale (R2) de manière à déterminer un deuxième courant (C2) à partir de l'écart angulaire (ε),
• additionner le premier courant (C1) et le deuxième courant (C2) de manière à déterminer un courant de commande (COM) de la servovalve (S) et
• lors de la réalisation de la deuxième correction intégrale (R2), limiter le deuxième courant (C2) selon une loi paramétrique (LP), la loi paramétrique (LP) imposant un deuxième courant (C2) de valeur nulle lorsque l'écart angulaire (ε) est inférieur, en valeur absolue, à un premier seuil angulaire déterminé (ε1).

6. Ensemble d'une roue (W), en particulier d'une roue d'un train d'atterrissage d'un aéronef, reliée à au moins un vérin hydraulique (V1, V2) commandé par une servovalve (S) et d'un système de contrôle (SC) selon la revendication 5 pour déterminer un courant de commande (COM) de la servovalve (S).

7. Ensemble selon la revendication 6 dans lequel la roue (W) est reliée à au moins un premier vérin hydraulique (V1) et un deuxième vérin hydraulique (V2) commandés par la servovalve (S).

8. Ensemble selon l'une des revendications 6 et 7 comprenant un module hydraulique (MH), comprenant la servovalve (S), configuré pour commander directement le premier vérin hydraulique (V1) et le deuxième vérin hydraulique (V2).

9. Train d'atterrissage d'un aéronef comprenant un ensemble selon l'une des revendications 6 à 8.

10. Aéronef comprenant un train d'atterrissage selon la revendication 9.

## Patentansprüche

1. Verfahren zur Regulierung der Winkelposition (ANG) eines Rades (W), insbesondere eines Rades eines Fahrwerks eines Fluggeräts, wobei das Rad (W) mit mindestens einem Hydraulikzylinder verbunden ist, der von einem Servoventil (S) gesteuert wird, wobei das Verfahren aufweist:
• einen Schritt des Bestimmens (E1) einer Winkelabweichung (ε) zwischen einer Messung der Winkelposition (ANGm) und einer Soll-Winkelposition (ANGc),
• einen ersten Schritt der proportionalen Korrektur (R1) derart, dass ein erster Strom (C1) ausgehend von der Winkelabweichung (ε) bestimmt wird,
• einen zweiten Schritt der integralen Korrektur (R2) derart, dass ein zweiter Strom (C2) ausgehend von der Winkelabweichung (ε) bestimmt wird,
• einen Schritt der Addition (E2) des ersten Stroms (C1) und des zweiten Stroms (C2) derart, dass ein Steuerstrom (COM) des Servoventils (S) bestimmt wird,
• wobei das Verfahren **dadurch gekennzeichnet ist, dass**
• der zweite Schritt der integralen Steuerung (R2) einen Unterschritt der Begrenzung (R2") des zweiten Stroms (C2) gemäß einem parametrischen Gesetz (LP) aufweist, wobei das parametrische Gesetz (LP) einen zweiten Strom (C2) mit dem Wert Null erzwingt, wenn die Winkelabweichung (ε) als absoluter Wert kleiner als ein erster bestimmter Winkelschwellenwert (ε1) ist.

2. Regulierungsverfahren nach Anspruch 1, wobei das parametrische Gesetz (LP) den zweiten Strom (C2) auf einen maximal gestatteten Stromwert (C2max) begrenzt, wenn die Winkelabweichung (ε) als absoluter Wert zwischen einem zweiten bestimmten Winkelschwellenwert (ε2) und einem dritten bestimmten Winkelschwellenwert (ε3) liegt, wobei der zweite bestimmte Winkelschwellenwert (ε2) und der dritte bestimmte Winkelschwellenwert (ε3) größer als der erste bestimmte Winkelschwellenwert (ε1) sind.

3. Regulierungsverfahren nach Anspruch 2, wobei das parametrische Gesetz (LP) den zweiten Strom (C2) gemäß einer aufsteigenden Rampe zwischen dem Wert Null und dem maximal gestatteten Stromwert (C2max) begrenzt, wenn die Winkelabweichung (ε) als absoluter Wert zwischen dem ersten bestimmten Winkelschwellenwert (ε1) und dem zweiten bestimmten Winkelschwellenwert (ε2) liegt.

4. Regulierungsverfahren nach einem der Ansprüche 2 und 3, wobei das parametrische Gesetz (LP) den zweiten Strom (C2) gemäß einer abfallenden Rampe zwischen dem maximal gestatteten Stromwert (C2max) und dem Wert Null begrenzt, wenn die Winkelabweichung (ε) als absoluter Wert zwischen dem dritten bestimmten Winkelschwellenwert (ε3) und einem vierten bestimmten Winkelschwellenwert (ε4) liegt, der größer als der dritte bestimme Schwellenwert (ε3) ist.

5. System zur Steuerung (SC) der Winkelposition eines Rades (W), insbesondere eines Rades eines Fahrwerks eines Fluggeräts, das mit mindestens einem Hydraulikzylinder (V1, V2) verbunden ist, der von eine Servoventil (S) gesteuert wird, wobei das Steuerungssystem (SC) einen Rechner (CAL) umfasst, der ausgelegt ist, um:
• eine Winkelabweichung (ε) zwischen einer Messung der Winkelposition (ANGm) und einer Soll-Winkelposition (ANGc) zu bestimmen,
• eine erste proportionale Korrektur (R1) derart durchzuführen, dass ein erster Strom (C1) ausgehend von der Winkelabweichung (ε) bestimmt wird,
• eine zweite integrale Korrektur (R2) derart durchzuführen, dass ein zweiter Strom (C2) ausgehend von der Winkelabweichung (ε) bestimmt wird,
• den ersten Strom (C1) und den zweiten Strom (C2) derart zu addieren, dass ein Steuerstrom (COM) des Servoventils (S) bestimmt wird, und
• bei der Durchführung der zweiten integralen Korrektur (R2) den zweiten Strom (C2) gemäß einem parametrischen Gesetz (LP) zu begrenzen, wobei das parametrische Gesetz (LP) einen zweiten Strom (C2) mit dem Wert Null erzwingt, wenn die Winkelabweichung (ε) als absoluter Wert kleiner als ein erster bestimmter Winkelschwellenwert (ε1) ist.

6. Anordnung aus einem Rad (W), insbesondere einem Rad eines Fahrwerks eines Fluggeräts, das mit mindestens einem Hydraulikzylinder (V1, V2) verbunden ist, der von einem Servoventil (S) gesteuert wird, und einem Steuerungssystem (SC) nach Anspruch 5, um einen Steuerstrom (COM) des Servoventils (S) zu bestimmen.

7. Anordnung nach Anspruch 6, wobei das Rad (W) mit mindestens einem ersten Hydraulikzylinder (V1) und einem zweiten Hydraulikzylinder (V2) verbunden ist, die von dem Servoventil (S) gesteuert werden.

8. Anordnung nach einem der Ansprüche 6 und 7, umfassend ein Hydraulikmodul (MH), welches das Servoventil (S) umfasst, das ausgelegt ist, um den ersten Hydraulikzylinder (V1) und den zweiten Hydraulikzylinder (V2) direkt zu steuern.

9. Fahrwerk eines Fluggeräts, umfassend eine Anordnung nach einem der Ansprüche 6 bis 8.

10. Fluggerät, umfassend ein Fahrwerk nach Anspruch 9.

## Claims

1. Method for adjusting the angular position (ANG) of a wheel (W), in particular of a wheel of an aircraft landing gear, the wheel (W) being connected to at least one hydraulic cylinder controlled by a servo valve (S), the method comprising:
- a step of determining (E1) an angular difference (ε) between a measurement of the angular position (ANGm) and a setpoint angular position (ANGc),
- a first proportional correction step (R1) so as to determine a first current (C1) from the angular difference (ε)
- a second integral correction step (R2) so as to determine a second current (C2) from the angular difference (ε),
- a step of adding (E2) the first current (C1) and the second current (C2) so as to determine a control current (COM) of the servo valve (S)
- method **characterised in** the fact that,
- the second integral adjustment step (R2) comprises a substep of limiting (R2") the second current (C2) according to a parametric law (LP), the parametric law (LP) imposing a zero-value second current (C2) when the angular difference (ε) is less, in absolute value, than a determined first angular threshold (ε1).

2. Method for adjusting according to claim 1, wherein the parametric law (LP) limits the second current (C2) to a maximum permissible current value (C2max) when the angular difference (ε) is comprised, in absolute value, between a second determined angular threshold (ε2) and a third determined angular threshold (ε3), the second determined angular threshold (ε2) and the third determined angular threshold (ε3) being greater than the first determined angular threshold (ε1).

3. Method for adjusting according to claim 2, wherein the parametric law (LP) limits the second current (C2) according to a rising ramp comprised between the zero value and the maximum permissible current value (C2max) when the angular difference (ε) is comprised, in absolute value, between the first determined angular threshold (ε1) and the second determined angular threshold (ε2).

4. Method for adjusting according to one of claims 2 and 3, wherein the parametric law (LP) limits the second current (C2) according to a falling ramp comprised between the maximum permissible current value (C2max) and the zero value when the angular difference (ε) is comprised, in absolute value, between the third determined angular threshold (ε3) and a fourth determined angular threshold (ε4) greater than the third determined threshold (ε3).

5. System for controlling (SC) the angular position of a wheel (W), in particular of a wheel of an aircraft landing gear, connected to at least one hydraulic cylinder (V1, V2) controlled by a servo valve (S), the control system (SC) comprising a calculator (CAL) configured to:
- determine an angular difference (ε) between a measurement of the angular position (ANGm) and a setpoint angular position (ANGc),
- perform a first proportional correction (R1) in order to determine a first current (C1) from the angular difference (ε)
- perform a second integral correction (R2) so as to determine a second current (C2) from the angular difference (ε),
- add the first current (C1) and the second current (C2) so as to determine a control current (COM) of the servo valve (S) and
- when performing the second integral correction (R2), limit the second current (C2) according to a parametric law (LP), the parametric law (LP) imposing a zero-value second current (C2) when the angular difference (ε) is less, in absolute value, than a first determined angular threshold (ε1).

6. Assembly of a wheel (W), in particular a wheel of an aircraft landing gear, connected to at least one hydraulic cylinder (V1, V2) controlled by a servo valve (S) and a control system (SC) according to claim 5 to determine a control current (COM) of the servo valve (S).

7. Assembly according to claim 6, wherein the wheel (W) is connected to at least one first hydraulic cylinder (V1) and a second hydraulic cylinder (V2) controlled by the servo valve (S).

8. Assembly according to one of claims 6 and 7 comprising a hydraulic module (MH), comprising the servo valve (S), configured to directly control the first hydraulic cylinder (V1) and the second hydraulic cylinder (V2).

9. Aircraft landing gear comprising an assembly according to one of claims 6 to 8.

10. Aircraft comprising a landing gear according to claim 9.
